# EUROPEAN PATENT SPECIFICATION

(11) **EP 0 201 064 B1**
(45) Date of publication and mention of the grant of the patent: **07.07.1993**
(21) Application number: 86106071.3
(22) Date of filing: 02.05.1986
(51) Int. Cl.: G06F 15/16, G06F 15/40

(54) **Computer system with data residency transparency and data access transparency**
Rechnersystem mit transparenter Datenresidenz und transparentem Datenzugriff
Système ordinateur à transparence de résidence de données et à transparence d'accès de données

(30) Priority: 06.05.1985 US 730929
(43) Date of publication of application: 12.11.1986
(73) Proprietor: COMPUTER X, INC., Schaumburg Illinois 60195 (US)
(72) Inventor: Mansfield, Bruce Marr, Kent Washington 98031 (US); Kolnick, Frank Charles, Willowdale Ontario CA M2J 2G8 (CA); Kun, Andrew Igor, Willowdale Ontario CA M2J 3B8 (CA)
(74) Representative: Hudson, Peter David

(56) References cited:
- IEE PROCEEDINGS, vol. 131, no. 2, part E, section A-I, March 1984, pages 38-44, Old Woking, Surrey, GB; R. HULL et al.: "Virtual resource ring: Technique for decentralised resource management in fault-tolerant distributed computer systems"
- THE FIRST INTERNATIONAL CONFERENCE ON COMPUTER COMMUNICATION, Washington, 24th-26th October 1972, pages 364-370, A.C.M., New York, US; D.J. FARBER et al.: "The structure of a distributed computer system - the distributed file system"

## Description

### TECHNICAL FIELD

This invention relates generally to digital data processing, and, in particular, to a data management system comprising a plurality of file systems coupled in a logical ring.

### BACKGROUND OF THE INVENTION

The present invention concerns a distributed data processing system - that is, two or more data processing systems which are capable of functioning independently but which are so coupled as to send and receive messages to and from one another.

A Local Area Network (LAN) is an example of a distributed data processing system. A typical LAN comprises a number of autonomous data processing "cells", each comprising at least a processor and memory. Each cell is capable of conducting data processing operations independently. In addition, each cell is coupled (by appropriate means such as a twisted wire pair, coaxial cable, fiber optic cable, etc.) to a network of other cells which may be, for example, a loop, star, tree, etc., depending upon the design considerations.

As mentioned above, the present invention finds utility in such a distributed data processing system, since there is a need in such a system for the processes which are executing or to be executed in the individual cells to share data and to communicate data among themselves.

Information may be thought of as being stored in the form of files in one or more "file systems". A file system is a way of logically organizing data, and it may comprise one or more physical data storage devices. Usually, a file system comprises an organized arrangement of data and a file index identifying the data, its location, and perhaps other characteristics.

In the present invention, any of the individual cells of a LAN may contain one or more file systems. Certain file systems may be unique, while other file systems may be copies in order to provide a degree of redundancy.

There is an urgent need in certain distributed data processing systems to provide "data access transparency". Data access transparency is defined herein to mean that any file can be accessed by any process located anywhere in the distributed data processing system.

There is also an urgent need regarding certain of such distributed data processing systems to provide "data residence transparency". Data residence transparancy is defined herein to mean that any file can be accessed wherever it may reside, even if it has been physically moved within the system.

A distributed message-based system which utilises a logical ring of local resource manager processes is known from IEE Proceedings, vol.131, no.2, part E, section A-I, March 1984, pages 38-44, Old Woking, Surrey, GB; R. Hull et al.:"Virtual resource ring: Technique for decentralised resource management in fault-tolerant distributed computer systems". A service request issued to one local resource manager is re-transmitted to the next manager in the virtual ring and passed around the virtual ring until it returns to the sender. The virtual resource ring nodes are identified by instance numbers which are used only within the virtual resource ring layer to link predecessor nodes with successor nodes. The reference also discloses the concept of accessing resources by generic names. However, it does not disclose use of both file system name and file name in an access request in order to accelerate access to files in the plurality of individual file systems, compared to file access by generic names only.

### Brief Summary of the Invention

Accordingly, it is an object of the present invention to provide an improved data management system within a distributed data processing system.

It is also an object of the present invention to provide a distributed data processing system having a data management system with data access transparency.

It is a further object of the present ivention to provide a distributed data processing system having a data management system with data residence transparency.

These and other objects are achieved in accordance with a first aspect of the present invention by providing a method of providing file system access in a data management system used in a data processing system comprising at least one processor, at least one memory storage unit coupled to said at least one processor, and a plurality of individual file systems and a requesting process contained in said at least one memory storage unit, said method comprising the steps of:
(a) generating an access request by said requesting process for a file having a given file name in one of said file systems having a given file system name, said access request specifying said file name and said file system name;
(b) transmitting said access request to one of said file systems;
(c) determining whether said file system has said specified file system name, and if so, proceeding with step (e), but if not, automatically forwarding said access request to a different file system;
(d) repeating step (c) until either said file system with said specified file system name is located, in which case proceeding with step (e), or until said access request has been received by all of said file systems without locating said file system with said specified file system name and in such case generating an indication of an unsuccessful access to said file to said requesting process; and
(e) determing whether said access request can be satisfied by said file system with said specified file system name, and, if so, satisfying said access request and generating an indication thereof directly to said requesting process, but if not, generating an indication of an unsuccessful access to said file to said requesting process.

In accordance with a second aspect of the invention there is provided a data management system for use in a data processing system comprising:
at least one processor for executing instructions;
at least one memory storage unit coupled to said at least one processor, said memory storage unit coupled to said at least one processor, said memory storage unit storing instructions and data;
a plurality of individual file systems contained in said at least one memory storage unit;
means responsive to the execution of an instruction by said at least one processor for generating an access request for a file having a given file name in at least one of said file systems having a specified file system name, said access request specifying said file name and said file system name;
means responsive to said access request generating means for transmitting said access request to one of said file systems; first means responsive to the receipt of said access request for determing whether said one file system has said specified file system name, and, if so, generating a first control signal, but if not, generating a second control signal;
second means responsive to said first control signal for determining whether said access request can be satisfied by said file system having said specified file system name, and, if so, for satisfying said access request and generating a first indication of a successful access to said file directly to said at least one processor, and, if not, for generating a second indication of an unsuccessful access to said file;
third means responsive to said access request generating means, to said second control signal, and to said second indication for automatically forwarding said access request to successive, different file systems whereby:
(a) if said access request is forwarded to a file system having said specified file system name, said first control signal is generated by said first means, in which case said second means either generates said first indication or said second indication, depending upon whether said file is successfully or unsuccessfully accessed, respectively, and
(b) if said access request is forwarded to a file system not having said specified file system name, said first means generates said second control signal,
said third means ceasing to forward said access requests after all of said file systems have been unsuccessfully accessed and generating a third indiction of an unsuccessful access to said file directly to said at least one processor.

### BRIEF DESCRIPTION OF THE DRAWINGS

The invention is pointed out with particularity in the appended claims. However, other features of the invention will become more apparent and the invention will be best understood by referring to the following detailed description in conjunction with the accompanying drawings in which:
FIG. 1 shows a representational illustration of a single network, distributed data processing system incorporating the improved data management system of the present invention.
FIG. 2 shows a block diagram illustrating a multiple-network, distributed data processing system incorporating the improved data management system of the present invention.
FIG. 3 shows an architectural model of a data processing system incorporating the present invention.
FIG. 4 shows the relationship between software contexts and processes as they relate to the present invention.
FIG. 5 shows how messages may be sent between processes within nested contexts.
FIG. 6 shows an architectural model of the improved data management system incorporating the present invention.
FIG. 7 shows an architectural software model of the improved data management system incorporating the present invention.
FIG. 8 shows a block diagram of a logical ring of file systems, illustrating how an access request to a file system is handled by the present invention.
FIG. 9 shows a flow diagram illustrating the operation of the improved data management system of the present invention.

### OVERVIEW OF COMPUTER SYSTEM

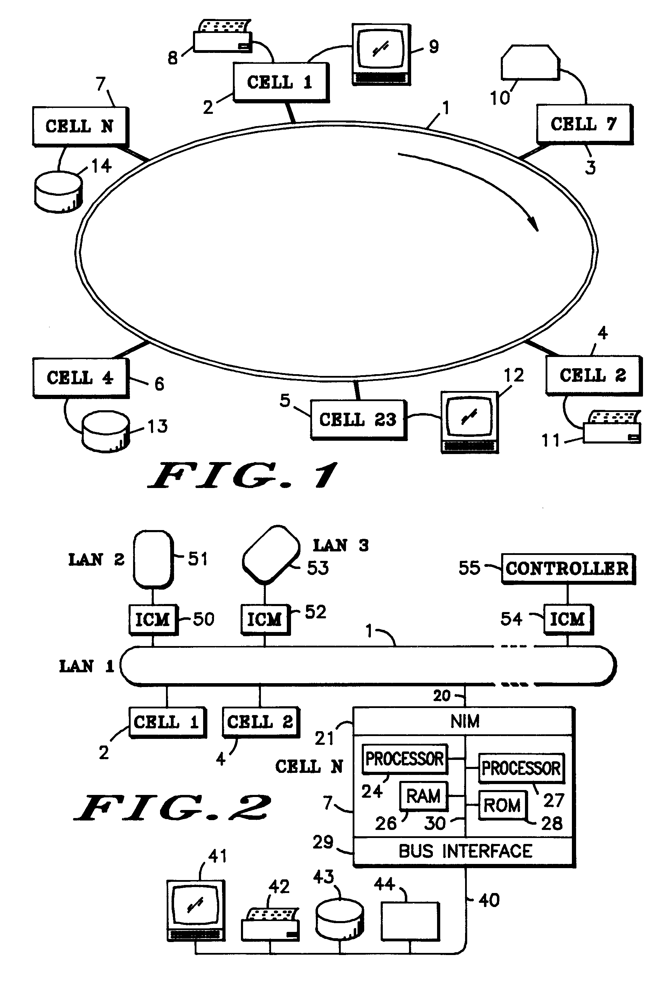

With reference to FIG. 1, a distributed computer configuration is shown comprising multiple cells 2-7 (nodes) loosely coupled by a local area network (LAN) 1. The number of cells which may be connected to the network is arbitrary and depends upon the user application. Each cell comprises at least a processor and memory, as will be discussed in greater detail with reference to FIG. 2 below. In addition, each cell may also include other units, such as a printer 8, operator display module (ODM) 9, mass memory module 13, and other I/O device 10.

With reference now to FIG. 2, a multiple-network distributed computer configuration is shown. A first local area network LAN 1 comprises several cells 2,4, and 7. LAN 1 is coupled to a second local area network LAN 2 by means of an Intelligent Communications Module (ICM) 50. The Intelligent Communications Module provides a link between the LAN and other networks and/or remote processors (such as programmable controllers).

LAN 2 may comprise several cells (not shown) and may operate under the same LAN protocol as that of the present invention, or it may operate under any of several commercially available protocols, such as Ethernet; MAP, the Manufacturing Automation Protocol of General Motors Corp.; Systems Network Architecture (SNA) of International Business Machines, Inc.; SECS-II; etc. Each ICM 50 is programmable for carrying out one of the above-mentioned specific protocols. In addition, the basic processing module of the cell itself can be used as an intelligent peripheral controller (IPC) for specialized devices.

LAN 1 is additionally coupled to a third local area network LAN 3 via ICM 52. A process controller 55 is also coupled to LAN 1 via ICM 54.

A representative cell N (7, FIG. 2) comprises a processor 24 which, in a preferred embodiment, is a Motorola 68010 processor. Each cell further includes a read only memory (ROM) 28 and a random access memory (RAM) 26. In addition, each cell includes a Network Interface Module (NIM) 21, which connects the cell to the LAN, and a Bus Interface 29, which couples the cell to additional devices within a cell. While a minimal cell is capable of supporting two peripheral devices, such as an Operator Display Module (ODM) 41 and an I/O Module 44, additional devices (including additional processors, such as processor 27) can be provided within a cell . Other additional devices may comprise, for example, a printer 42, and a mass-storage module 43 which supports a hard disk and a back-up device (floppy disk or streaming tape drive).

The Operator Display Module 41 provides a keyboard and screen to enable an operator to input information and receive visual information.

While a single cell may comprise all of the above units, in the typical user application individual cells will normally be dedicated to specialized functions. For example, one or more mass storage cells may be set up to function as data base servers. There may also be several operator consoles and at least one cell for generating hard-copy printed output. Either these same cells, or separate dedicated cells, may execute particular application programs.

The system is particularly designed to provide an integrated solution for factory automation, data acquisition, and other real-time applications. As such, it includes a full complement of services, such as a graphical output, windows, menus, icons, dynamic displays, electronic mail, event recording, and file management. Software development features include compilers, a window-oriented editor, a debugger, and performance-monitoring tools.

### Local Area Network

The local area network, as depicted in either FIG.1 or FIG. 2, ties the entire system together and makes possible the distributed virtual machine model described below. The LAN provides high throughput, guaranteed response, reliability, and low entry cost. The LAN is also autonomous, in the sense that all system and applications software is unaware of its existence. For example, any Network Interface Module (e.g. NIM 21, FIG. 2) could be replaced without rewriting any software other than that which directly drives it.

The LAN interconnection medium may be twisted-pair or coaxial cable. Two channels (logically, two distinct networks) may be provided for reliability and for increased throughput.

The LAN architecture is a logical ring, in which an electronic "token" is constantly passed from cell to cell at high speed. The current holder of the token may use it to send a "frame" of data or may pass it on to the next cell in the ring. The NIM only needs to know the logical address and status of its immediately succeeding neighbor. The NIM's responsibility is limited to detecting the failure of that neighbor or the inclusion of a new neighbor. In general, adjustment to failed or newly added cells is automatic.

The network interface maps directly into the processor's memory. Data exchange occurs through a dual-ported buffer pool which contains a linked list of pending "frames". Logical messages, which vary in length, are broken into fixed-size frames for transmission and are reassembled by the receiving NIM. Frames are sequence-numbered for this purpose. If a frame is not acknowledged within a short period of time, it is retransmitted a number of times before being treated as a failure.

As described above with reference to FIG. 2, the LAN may be connected to other LAN's operating under the same LAN protocol via so-called "bridgeways", or it may be connected to other types of LAN's via "gateways".

### Software Model

The computer operating system of the present invention operates upon processes, messages, and contexts, as such terms are defined hereinafter in the section entitled "Virtual Machine". This operating system offers the programmer a hardware abstraction, rather than a data or control abstraction.

Processes are referenced without regard to their physical location via a small set of message-passing primitives. Every process has both a unique system-generated identifier and a not necessarily unique name assigned by the programmer. The identifier provides quick direct access, while the name has a limited scope and provides symbolic, indirect access.

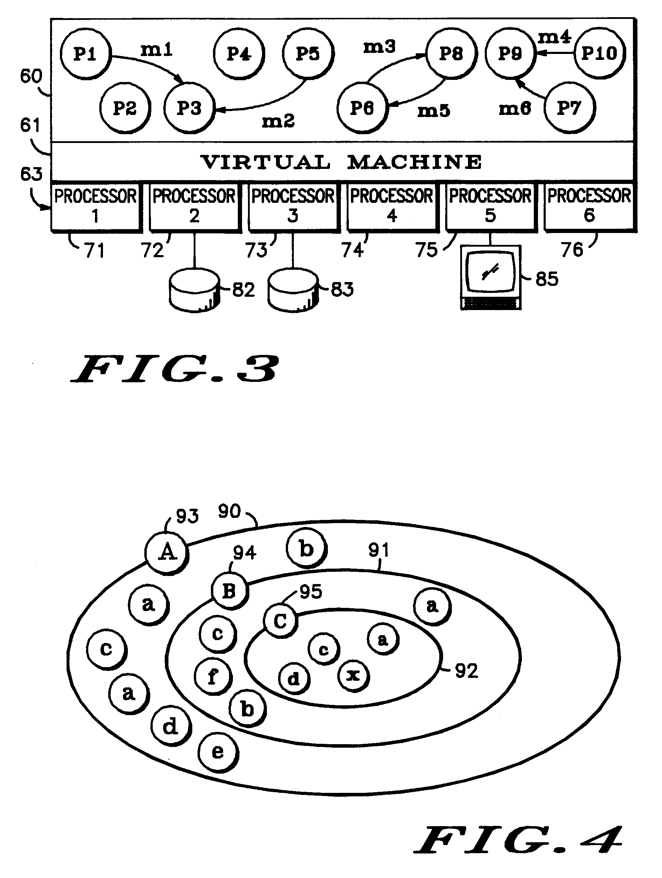

With reference to FIG. 3, an architectural model of the present invention is shown. The bottom, or hardware, layer 63 comprises a number of processors 71-76, as described above. The processors 71-76 may exist physically within one or more cells. The top, or software, layer 60 illustrates a number of processes P1-P10 which send messages m1-m6 to each other. The middle layer 61, labelled "virtual machine", isolates the hardware from the software, and it allows programs to be written as if they were going to be executed on a single processor. Conversely, programs can be distributed across multiple processors without having been explicitly designed for that purpose.

An important purpose of the virtual machine concept herein-disclosed is to provide the applications programmer with a simple, consistent model in which to design his system. This model, as mentioned above, is reduced to several elemental concepts: processes, messages, and contexts, each of which will be defined and discussed in detail below. As a consequence of this elemental model, hardware peculiarities are made transparent to the user, and changes in hardware configurations have no direct effect on the software.

### The Virtual Machine

A "process" is a self-contained package of data and executable procedures which operate on that data. The data is totally private and cannot be accessed by other processes. There is no concept of shared memory within the present invention. Execution of a process is strictly sequential. Multiple processes execute concurrently and must be scheduled by the operating system. The processes can be re-entrant, in which case only one copy of the code is loaded even if multiple instances are active.

Every process has a unique "process identifier number" (PID) by which it can be referenced. The PID is assigned by the system when the process is created and remains in effect until the process terminates. The PID assignment contains a randomizing factor which guarantees that the PID will not be re-used in the near future. The contents of the PID are irrelevant to the programmer but are used by the virtual machine to physically locate the process. A PID may be thought of as a "pointer" to a process.

Every process also has a "name" which is a variable-length string of characters assigned by the programmer. A name need not be unique, and this ambiguity may be used to add new services transparently and to aid in fault-tolerance.

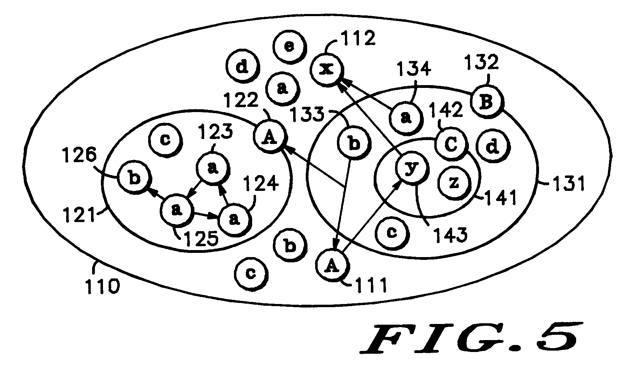

FIG. 4 illustrates that the system-wide name space is partitioned into distinct subsets by means of "contexts" identified by reference numerals 90-92. A context is simply a collection of related processes whose names are not known outside of the context. Context 90, for example, contains processes **A**, **a**, **a**, **b**, **c**, **d**, and **e**. Context 91 contains processes **B**, **a**, **b**, **c**, and **f**. And context 92 contains processes **C**, **a**, **c**, **d**, and **x**.

One particular process in each context, called the "context process", is known both within the context and within the immediately enclosing one (referred to as its "parent context"). In the example illustrated in FIG. 4, processes **A-C** are context processes for contexts 90-92, respectively. The parent context of context 91 is context 90, and the parent context of context 92 is context 91. Conceptually, the context process is located on the boundary of the context and acts as a gate into it.

Processes inside context 92 can reference any processes inside contexts 90 and 91 by name. However, processes in context 91 can only access processes in context 92 by going through the context process **C**. Processes in context 90 can only access processes in context 92 by going through context processes **B** and **C**.

The function of the context process is to filter incoming messages and either reject them or reroute them to other processes in its context. Contexts may be nested, allowing a hierarchy of abstractions to be constructed. A context must reside completely on one cell. The entire system is treated as an all-encompassing context which is always present and which is the highest level in the hierarchy. In essence, contexts define localized protection domains and greatly reduce the chances of unintentional naming conflicts.

If appropriate, a process inside one context can be "connected" to one inside another context by exchanging PID's, once contact has been established through one or the other of the context processes. Most process servers within the present invention function that way. Initial access is by name. Once the desired function (such as a window or file) is "opened", the user process and the service communicate directly via PID's.

A "message" is a variable-length buffer (limited only by the processor's physical memory size) which carries information between processes. A header, inaccessible to the programmer, contains the destination name and the sender's PID. By convention, the first field in a message is a null-terminated string which defines the type of message (e.g., "read", "status", etc.) Messages are queued to the receiving process when they are sent. Queuing ensures serial access and is used in preference to semaphores, monitors, etc.

Messages provide the mechanism by which hardware transparency is achieved. A process located anywhere in the virtual machine can send a message to any other process if it knows its name. Transparency applies with some restrictions across bridgeways (i.e., the interfaces between LAN's operating under identical network protocols) and, in general, not at all across gateways (i.e., the interfaces between LAN's operating under different network protocols) due to performance degradation. However, they could so operate, depending upon the required level of performance.

### Inter-Process Communication

All inter-process communication is via messages. Consequently, most of the virtual machine primitives are concerned with processing messages. The virtual machine kernel primitives are the following:
- ALLOC: - requests allocation of a (message) buffer of a given size.
- FREE: - requests deallocation of a given message buffer.
- PUT: - end a message to a given destination (by name or PID).
- GET: - wait for and dequeue the next incoming message, optionally from a specific process (by PID).
- FORWARD: - pass a received message through to another process.
- CALL: - send a message, then wait for and dequeue the reply.
- REPLY: - send a message to the originator of a given message.
- ANY_MSG: - returns "true" if the receive queue is not empty, else returns "false"; optionally, checks if any messages from a specific PID are queued.

To further describe the function of the kernel primitives, ALLOC handles all memory allocations. It returns a pointer to a buffer which can be used for local storage within the process or which can be sent to another process (via PUT, etc.). ALLOC never "fails", but rather waits until enough memory is freed to satisfy the request.

The PUT primitive queues a message to another process. The sending process resumes execution as soon as the message is queued.

FORWARD is used to quickly reroute a message but maintain information about the original sender (whereas PUT always makes the sending process the originator of the message).

REPLY sends a message to the originator of a previously received message, rather than by name or PID.

CALL essentially implements remote subroutine invocations, causing the caller to suspend until the receiver executes a REPLY. Subsequently, the replied message is dequeued out of sequence, immediately upon arrival, and the caller resumes execution.

The emphasis is on concurrency, so that as many processes as possible are executed in parallel. Hence neither PUT nor FORWARD waits for the message to be delivered. Conversely, GETS suspends a process until a message arrives and dequeues it in one operation. The ANY_MSG primitive is provided so that a process may determine whether there is anything of interest in the queue before committing itself to a GET.

When a message is sent by name, the destination process must be found in the name space. The search path is determined by the nesting of the contexts in which the sending process resides. From a given process, a message can be sent to all processes in its own context or (optionally) to those in any higher context. Refer to FIG. 5. The contexts are searched from the current one upward until a match is found or until the system context is reached. All processes with the same name in that context are then queued a copy of the message.

For example, with reference to FIG. 5, assume that in context 141 process **y** sends a message to ALL processes by the name **x**. Process **y** first searches within its own context 141 but finds no process **x**. The process **y** searches within the next higher context 131 (its parent context) but again finds no process **x**. Then process **y** searches within the next higher context 110 and finds a process **x**, identified by reference numeral 112. Since it is the only process **x** in context 110, it is the only recipient of the message from process **y**.

If process **a** in context 131 sends a message to ALL processes by the name **x**, it first searches within its own context 131 and, finding no processes **x** there, it then searches within context 110 and finds process **x**.

Assume that process **b** in context 131 sends a message to ALL processes by the name **A**. It would find process **A** (111) in context 110, as well as process **A** (122) which is the context process for context 121.

A process may also send a message to itself or to its context process without knowing either name explicitly.

The concept of a "logical ring" (analogous to a LAN) allows a message to be sent to the NEXT process in the system with a given name. The message goes to exactly one process in the sender's context, if such a process exists. Otherwise the parent context is searched.

The virtual machine guarantees that each NEXT transmission will reach a different process and that eventually a transmission will be sent to the logically "first" process (the one that sent the original message) in the ring, completing the loop. In other words, all processes with the same name at the same level can communicate with each other without knowing how many there are or where they are located. The logical ring is essential for distributing services such as a data base. The ordering of processes in the ring is not predictable.

For example, if process **a** (125) in context 121 sends a message to process **a** using the NEXT primitive, the search finds a first process **a** (124) in the same context 121. Process **a** (124) is marked as having received the message, and then process **a** (124) sends the message on to the NEXT process **a** (123) in context 121. Process **a** (123) is marked as having received the message, and then it sends the message on to the NEXT process **a**, which is the original sender process **a** (125), which knows not to send it further on, since it's been marked as having already received the message.

Sending messages directly by PID obviates the need for a name search and ignores context boundaries. This is known as the DIRECT mode of transmission and is the most efficient. For example, process **A** (111) sends a message in the DIRECT mode to process **y** in context 141.

If a process sends a message in the LOCAL transmission mode, it sends it only to a process having the given name in the sender's own context.BBB

In summary, including the DIRECT transmission mode, there are five transmission modes which can be used with the PUT, FORWARD, and CALL primitives:
- ALL: - to all processes with the given name in the first context which contains that name, starting with the sender's context and searching upwards through all parent contexts.
- LOCAL: - to all processes with the given name in the sender's context only.
- NEXT: - to the next process with the given name in the same context as the sender, if any; otherwise it searches upwards through all parent contexts until the name is found.
- LEVEL: - sends to "self" (the sending process) or to "context" (the context process corresponding to the sender's context); "self" cannot be used with CALL primitive.
- DIRECT: - sent by PID.

Messages are usually transmitted by queueing a pointer to the buffer containing the message. A message is only copied when there are multiple destinations or when the destination is on another cell.

### Operating System

The operating system of the present invention consists of a kernel, which implements the primitives described above, plus a set of processes which provide process creation and termination, time management (set time, set alarm, etc.) and which perform cell start-up and configuration. Drivers for devices are also implemented as processes (EESP's), as described above. This allows both system services and device drivers to be added or replaced easily. The operating system also supports swapping and paging, although both are invisible to applications software.

Unlike known distributed computer systems, that of the present invention does not use a distinct "name server" process to resolve names. Name searching is confined to the kernel, which has the advantage of being much faster.

A minimal bootstrap program resides permanently (in ROM) on every cell, e.g. ROM 28 in cell N of FIG. 2. The bootstrap program executes automatically when a cell is powered up and begins by performing basic on-board diagnostics. It then attempts to find and start an initial system code module which comprises the entire kernel, and EESP's for the clock, disk (if required), and NIM (if required). The module is sought on the first disk drive on the cell, if any. If there isn't a disk, and the cell is on the LAN, a message will be sent out requesting the module. Failing that, the required software must be resident in ROM. System services for the clock and for process creation, an initialization program, and a minimal file system, are also built into the module. The initialization program sets up all of the kernel's internal tables and then calls predefined entry points in each of the preloaded services (file management, etc.). The net result is that EESP's for the attached devices are scheduled to run, and the cell is available.

In general, there exists a template file describing the initial software and hardware for each cell in the system. The template defines a set of initial processes (usually one per service) which are scheduled immediately after the cell start-up. These processes then start up their respective subsystems. A cell configuration service on each cell sends configuration messages to each subsystem when it is being initialized, informing it of the devices it owns. Thereafter, similar messages are sent whenever a new device is added to the cell or a device fails or is removed from the cell.

Thus there is no well-defined meaning for "system up" or "system down" - as long as any cell is active, the system as a whole may be considered to be "up". Cells can be shut down or started up dynamically without affecting other cells on the network. The same principle applies, in a limited sense, to peripherals. Devices which can identify themselves with regard to type, model number, etc. can be added or removed without operator intervention. The operating system cannot maintain a global status of the system, nor does it attempt to centralize control of the entire system.

### Data Management

The present invention allows the user to store and retrieve data at several levels of abstraction. At various levels it provides device-independence, transparency, multiple views of the same data and support for transaction processing. Transparency means that a process need not know where a file is stored in order to access it. It also means that the file can be moved to another device without affecting the process. Only as many levels as are required for a particular application need be included in the system.

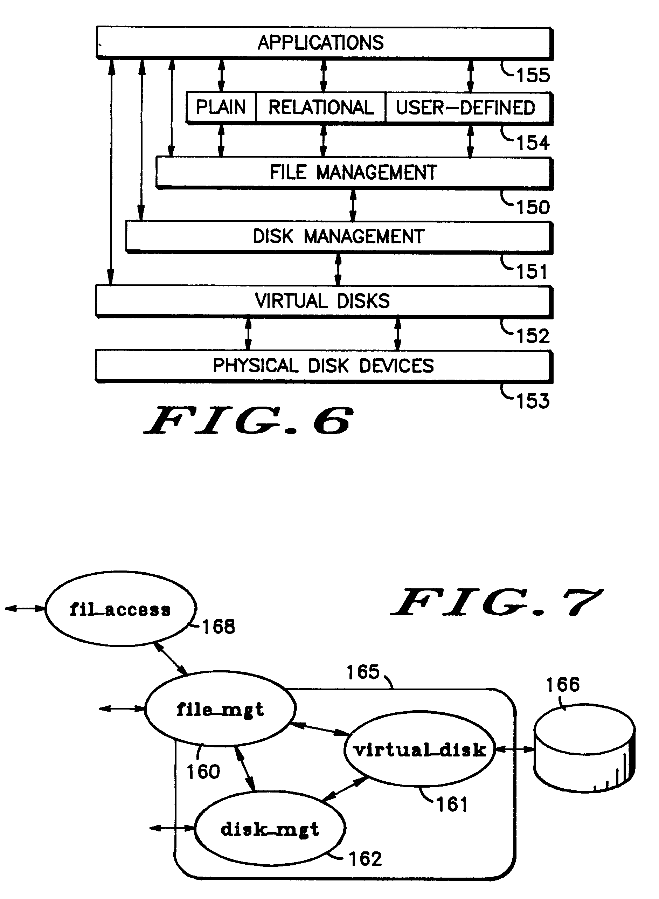

Referring now to FIG. 6, the lowest level of data management is the physical disk layer 153, which is completely hidden from all applications software 155. Immediately above this level are virtual disks 152 which define an interface in terms of linear arrays of 1K blocks, regardless of the actual medium. Although the usual medium is disk, RAM may also be used (for temporary files) to improve performance. Three types of messages are supported at this level: "initial", to format the virtual disk, and "read" and "write" to access specific blocks.

The third level, disk management 151, organizes data within a virtual disk by means of indices. A disk index is a file at this level and is viewed as an extensible linear array of bytes. Messages are accepted to initialize the disk, allocate and delete indices, and read and write indices. The latter two functions operate starting at a given byte offset for a given byte length. An index is automatically extended when a request references a location outside the current limits. Physical storage is allocated only when data is actually written. Optional data caching is supported at the disk management level on a per cell basis.

File management 150 is layered on top of disk management 151 and introduces the concept of a "file system". A file system is a collection of named files (or named indices, in terms of the disk management layer 151). The name space constitutes a flat (single-level) directory which is allocated when the file system is initialized. A name may be up to 64 characters long and is hashed into the directory. Unnamed files are useful for building complex disk structures which are logically linked to each other, such as a hierarchical file directory or a database, or for temporary files which only the creator will use.

Transparency is supported only at the file management level 150 and above.

The highest level 154 of data management deals in terms of "metaphors", which implement application-specific views of the data. A relational database is one example of a metaphor. Complex operations such as multi-user synchronization and record- or field-locking may be implemented at this level. The present invention supports two built-in views of the data: "plain" files, which are superficially equivalent to UNIX™ files, and a relational database.

FIG. 7 illustrates the design of the data management software up to the plain-file level. Each active (mounted) file system 165 is represented by a file management context 160. The set of all such contexts forms a logical ring for purposes of message transmission; in other words, they all have the same name ("file_mgt"). The actual name of the file system (stored on the disk 166 at initialization) is known to the context process.

In the plain-file metaphor, there is exactly one process for each open file, acting as a server for that file. That process (an instance of "fil_access") can be located in the appropriate file management context, or any application can create its own private copy of the process. The process allows standard file management functions (NEW, DELETE, RENAME, OPEN, and CLOSE) plus SEEK, LOCK (lock the entire file against access by processes other than the owner) and UNLOCK. Note that a given file process is only opened once, by its owner. If not locked, any other processes which know its name or PID can read and write the file. Protection is provided through normal process name-scoping. Protection via passwords or a similar mechanism are in general unsupported unless supported by another metaphor.

### DETAILED DESCRIPTION OF THE INVENTION

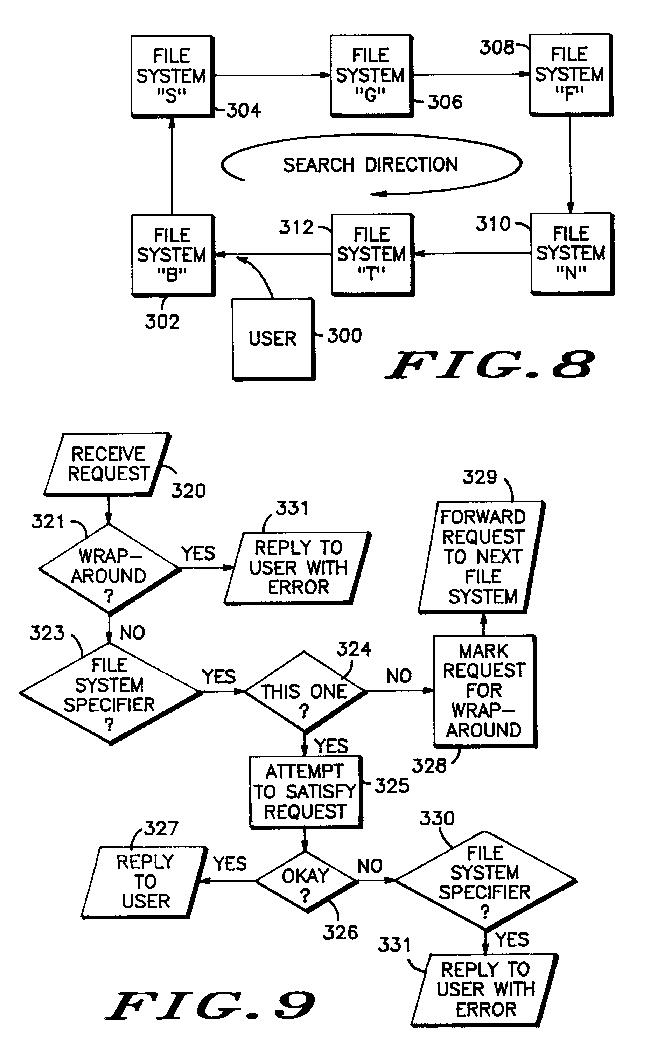

Referring now to FIG. 8, a block diagram is shown of a logical ring of file systems, illustrating how an access request to a file system is handled by the present invention. Each mounted disk volume in the distributed data processing system of the present invention constitutes a file system. Each file system is managed by a file management context whose architecture is represented by FIG. 7. On a relatively large system there may be any number of active file systems (i.e. active file management contexts), where each file management context has the name "file_mgt". The set of these contexts is connected together in a logical ring, as shown in FIG. 8. The name of a file system is established when a disk volume is initialized. The file system name is written into the volume header on the disk. When a file management context starts up, it attempts to read the volume header of its associated disk. If successful, the volume name is read and becomes the name of the file system which that context manages. If unsuccessful, the volume is marked as uninitialized. Thereafter only an INITIAL command is accepted.

Within a file management context, requests which reference a file by name (NEW, DELETE, RENAME, OPEN, and CLOSE) are sent to the context process "file_mgt". Requests which access data (READ and WRITE) are sent directly by their PID to the disk_mgt process within the file management context. This PID, as well as the associated disk index, is returned in the reply to a successful NEW or OPEN command. This connects the user (e.g., a data management process) to a specific file allocation on a specific volume.

As shown in FIG. 8, all active file management contexts are viewed as forming a logical ring. Requests referencing a file by name are sent to the context process named "file_mgt" using transmission mode NEXT. Each context process "file_mgt" determines whether the request is for the file system which it manages, and, if it is not, it forwards the request to the next context "file_mgt". If a request circulates the logical ring without success, then it is returned to the caller with an error indication.

In FIG. 8, assume that a user 300 (e.g. an application context) initiates a file access request to a certain "TEMP" file in file system "G" 306. The file access request is first received by the "file_mgt" context process of file system "B" 302, which determines that the request is not for file system "B" and forwards it to file system "S" 304. Likewise, file system "S" 304 forwards the request on to file system "G" 306. The "file_mgt" context process of file system "G" 306 recognizes that the request is intended for this file system and then responds to user 300 that it will attempt to satisfy the request.

Had the file access request circulated the entire loop without success, it would have returned to user 300 with an error message. To prevent the request from recirculating the loop, once a given file system (e.g. file system "B" 302) fails to satisfy the request, it records an indication that it has attempted to satisfy this particular request, so that it doesn't reattempt to satisfy the request on any wrap-around.

A file access request specifies both a file system name and a file name. Suppose, for example, that user 300 doesn't care where a file is to be opened. In this case, an attempt is made by each successive "file_mgt" context to satisfy the request of user 300. Thus the set of all disk volumes in the system may be considered one large disk space, and the user doesn't have to know where any given file is logically or physically located.

For example, assume user 300 inititates a file access request to a file. File system "B" 302 will first attempt to satisfy the request. However, if it's unable to, e.g. because of insufficient space, it forwards the request on to file system "S" 304. If file system "S" 304 is capable of satisfying the request, it so notifies user 300. Otherwise, the request continues on to each file system in turn until one is able to satisfy the request. If none is able to satisfy the request, an error message is returned to user 300. As mentioned above, once a file system fails to satisfy the request, it marks the attempt, so that it doesn't attempt to satisfy the request if the request circulates around the entire loop without being satisfied.

The flow diagram of FIG. 9 illustrates how a file access request is handled by the present invention. A file access request is received in block 320. Decision block 321 queries whether this is a wrap-around. If so, an error message is sent to the user as indicated by block 322. If not, the procedure passes to decision block 323, which queries whether a file system has been specified. Decision block 324 queries whether this particular file system is the one specified. If so, this particular file system attempts to satisfy the request.

If this is not the file system specified, then the request is marked for wrap-around, as shown by block 328, and the request is forwarded to the next file system, as shown by block 329.

If the request can be satisfied (block 326), then the user is so informed (block 327). If not, decision block 330 queries whether a file system was specified. If so, an error message is sent to the user, as indicated by block 331. If not, the request is marked for wrap-around (block 328), and the the request is forwarded to the next file system (block 329).

A "C" language implementation of the flow diagram shown in FIG. 9 and a detailed description of the relevant portions of the source code listing are included in Annex A and B of the published application EP-A-0201064.

It will be apparent to those skilled in the art that the invention as claimed may be modified in numerous ways and may assume many embodiments other than the preferred form specifically set out and described above. For example, a file system may obviously occupy some other physical device, or portion or grouping thereof, other than a disk volume, as disclosed above.

## Claims

1. A method of providing file system access in a data management system used in a data processing system comprising at least one processor, at least one memory storage unit coupled to said at least one processor, and a plurality of individual file systems and a requesting process contained in said at least one memory storage unit, said method comprising the steps of:
(a) generating an access request by said requesting process for a file having a given file name in one of said file systems having a given file system name, said access request specifying said file name and said file system name;
(b) transmitting said access request to one of said file systems;
(c) determining whether said file system has said specified file system name, and, if so, proceeding with step (e), but if not, automatically forwarding said access request to a different file system;
(d) repeating step (c) until either said file system with said specified file system name is located, in which case proceeding with step (e), or until said access request has been received by all of said file systems without locating said file system with said specified file system name and in such case generating an indication of an unsuccessful access to said file to said requesting process; and
(e) determining whether said access request can be satisfied by said file system with said specified file system name, and, if so, satisfying said access request and generating an indication thereof directly to said requesting process, but if not, generating an indication of an unsuccessful access to said file to said requesting process.

2. The method of providing file system access recited in claim 1, wherein in steps (b) and (c) said access request is always forwarded to said file systems in a predetermined order.

3. A method of providing file system access in a data management system used in a data processing system comprising a plurality of processors interconnected by a network, a plurality of memory storage units, each processor being coupled to at least one memory storage unit, and a plurality of individual file systems and a requesting process contained in at least one memory storage unit, said method comprising the steps of:
(a) generating an access request by said requesting process for a file having a given file name in one of said file systems having a given file system name, said access request specifying said file name and said file system name;
(b) transmitting said access request to one of said file systems;
(c) determining whether said file system has said specified file system name, and, if so, proceeding with step (e), but if not, automatically forwarding said access request to a different file system;
(d) repeating step (c) until either said file system with said specified file system name is located, in which case proceeding with step (e), or until said access request has been received by all of said file systems without locating said file system with said specified file system name and in such case generating an indication of an unsuccessful access to said file to said requesting process; and
(e) determining whether said access request can be satisfied by said file system with said specified file system name, and, if so, satisfying said access request and generating an indication thereof directly to said requesting process, but if not, generating an indication of an unsuccessful access to said file to said requesting process.

4. The method of providing file system access recited in claim 3, wherein in steps (b) and (c) said access request is forwarded to said file systems in a predetermined order.

5. A data management system for use in a data processing system comprising:
at least one processor for executing instructions;
at least one memory storage unit coupled to said at least one processor, said memory storage unit storing instructions and data;
a plurality of individual file systems contained in said at least one memory storage unit;
means responsive to the execution of an instruction by said at least one processor for generating an access request for a file having a given file name in at least one of said file systems having a specified file system name, said access request specifying said file name and said file system name;
means responsive to said access request generating means for transmitting said access request to one of said file systems;
first means responsive to the receipt of said access request for determining whether said one file system has said specified file system name, and, if so, generating a first control signal, but if not, generating a second control signal;
second means responsive to said first control signal for determining whether said access request can be satisfied by said file system having said specified file system name, and, if so, for satisfying said access request and generating a first indication of a successful access to said file directly to said at least one processor, and, if not, for generating a second indication of an unsuccessful access to said file;
third means responsive to said access request generating means, to said second control signal, and to said second indication for automatically forwarding said access request to successive, different file systems whereby:
(a) if said access request is forwarded to a file system having said specified file system name, said first control signal is generated by said first means, in which case said second means either generates said first indication or said second indication, depending upon whether said file is successfully or unsuccessfully accessed, respectively, and
(b) if said access request is forwarded to a file system not having said specified file system name, said first means generates said second control signal,
said third means ceasing to forward said access requests after all of said file systems have been unsuccessfully accessed and generating a third indication of an unsuccessful access to said file directly to said at least one processor.

6. The data management system recited in claim 5, and further comprising means responsive to said access request generating means and to said access request forwarding means for forwarding said access request to said file systems in a predetermined pattern.

7. A data management system for use in a data processing system comprising:
a plurality of processors for executing instructions, said processors being interconnected by a network;
a plurality of memory storage units, each said processor being coupled to at least one of said memory storage units, said memory storage units storing instructions and data;
a plurality of individual file systems contained in at least one of said memory storage units;
means responsive to the execution of an instruction by one of said processors for generating an access request for a file having a given file name in at least one of said file systems having a specified file system name, said access request specifying said file name and said file system name;
means responsive to said access request generating means for transmitting said access request to one of said file systems;
first means responsive to the receipt of said access request for determining whether said one file system has said specified file system name, and, if so, generating a first control signal, but if not, generating a second control signal;
second means responsive to said first control signal for determining whether said access request can be satisfied by said file system having said specified file system name, and, if so, for satisfying said access request and generating a first indication of a successful access to said file directly to said one of said processors, and, if not, for generating a second indication of an unsuccessful access to said file;
third means responsive to said access request generating means, to said second control signal, and to said second indication for automatically forwarding said access request to successive, different file systems whereby:
(a) if said access request is forwarded to a file system having said specified file system name, said first control signal is generated by said first means, in which case said second means either generates said first indication or said second indication, depending upon whether said file is successfully or unsuccessfully accessed, respectively, and
(b) if said access request is forwarded to a file system not having said specified file system name, said first means generates said second control signal,
said third means ceasing to forward said access request after all of said file systems have been unsuccessfully accessed and generating a third indication of an unsuccessful access to said file directly to said one of said processors.

8. The data management system recited in claim 7, and further comprising means responsive to said access request generating means and to said access request forwarding means for forwarding said access request to said file systems in a predetermined pattern.

## Patentansprüche

1. Verfahren zum Bereitstellen von Dateisystemzugriff bei einem Datenverwaltungssystem, das in einem Datenverarbeitungssystem verwendet wird, das mindestens einen Prozessor, mindestens eine mit dem mindestens einen Prozessor verbundene Speichereinheit und eine Mehrzahl individueller Dateisysteme und einen in der mindestens einen Speichereinheit enthaltenen anfragenden Prozeß umfaßt, wobei das Verfahren die Schritte umfaßt:
(a) Erzeugen einer Zugriffsanfrage durch den anfragenden Prozeß für eine Datei mit einem gegebenen Dateinamen in einem der Dateisysteme mit einem gegebenen Dateisystemnamen, wobei die Zugriffsanfrage den Dateinamen und den Dateisystemnamen spezifiziert;
(b) Übermitteln der Zugriffsanfrage an eines der Dateisysteme;
(c) Bestimmen, ob das Dateisystem den spezifizierten Dateisystemnamen hat, wenn ja, Fortfahren mit Schritt (e), aber wenn nicht, automatisches Weiterleiten der Zugriffsanfrage an ein anderes Dateisystem;
(d) Wiederholen von Schritt (c), bis entweder das Dateisystem mit dem spezifizierten Dateisystemnamen lokalisiert ist, in welchem Fall mit Schritt (e) fortgefahren wird, oder bis die Zugriffsanfrage von allen der Dateisysteme empfangen wurde, ohne das Dateisystem mit dem spezifizierten Dateisystemnamen zu lokalisieren, und in einem solchen Fall Erzeugen eines Hinweises eines erfolglosen Zugriffs auf die Datei an den anfragenden Prozeß; und
(e) Bestimmen, ob die Zugriffsanfrage durch das Dateisystem mit dem spezifizierten Dateisystemnamen erfüllt werden kann, wenn ja, Erfüllen der Zugriffsanfrage und Erzeugen eines Hinweises davon direkt an den anfragenden Prozeß, aber wenn nicht, Erzeugen eines Hinweises eines erfolglosen Zugriffs auf die Datei an den anfragenden Prozeß.

2. Verfahren zum Bereitstellen von Dateisystemzugriff nach Anspruch 1, worin in den Schritten (b) und (c) die Zugriffsanfrage immer in einer vorbestimmten Reihenfolge an die Dateisysteme weitergeleitet wird.

3. Verfahren zum Bereitstellen von Dateisystemzugriff bei einem Datenverwaltungssystem, das in einem Datenverarbeitungssystem verwendet wird, das eine Mehrzahl durch ein Netzwerk zusammengeschalteter Prozessoren, eine Mehrzahl von Speichereinheiten, wobei jeder Prozessor mit mindestens einer Speichereinheit verbunden ist, und eine Mehrzahl individueller Dateisysteme und einen in mindestens einer Speichereinheit enthaltenen anfragenden Prozeß umfaßt, wobei das Verfahren die Schritte umfaßt:
(a) Erzeugen einer Zugriffsanfrage durch den anfragenden Prozeß für eine Datei mit einem gegebenen Dateinamen in einem der Dateisysteme mit einem gegebenen Dateisystemnamen, wobei die Zugriffsanfrage den Dateinamen und den Dateisystemnamen spezifiziert;
(b) Übermitteln der Zugriffsanfrage an eines der Dateisysteme;
(c) Bestimmen, ob das Dateisystem den spezifizierten Dateisystemnamen hat, wenn ja, Fortfahren mit Schritt (e), aber wenn nicht, automatisches Weiterleiten der Zugriffsanfrage an ein anderes Dateisystem;
(d) Wiederholen von Schritt (c), bis entweder das Dateisystem mit dem spezifizierten Dateisystemnamen lokalisiert ist, in welchem Fall mit Schritt (e) fortgefahren wird, oder bis die Zugriffsanfrage von allen der Dateisysteme empfangen wurde, ohne das Dateisystem mit dem spezifizierten Dateisystemnamen zu lokalisieren, und in einem solchen Fall Erzeugen eines Hinweises eines erfolglosen Zugriffs auf die Datei an den anfragenden Prozeß; und
(e) Bestimmen, ob die Zugriffsanfrage durch das Dateisystem mit dem spezifizierten Dateisystemnamen erfüllt werden kann, wenn ja, Erfüllen der Zugriffsanfrage und Erzeugen eines Hinweises davon direkt an den anfragenden Prozeß, aber wenn nicht, Erzeugen eines Hinweises eines erfolglosen Zugriffs auf die Datei an den anfragenden Prozeß.

4. Verfahren zum Bereitstellen von Dateisystemzugriff nach Anspruch 3, worin in den Schritten (b) und (c) die Zugriffsanfrage in einer vorbestimmten Reihenfolge an die Dateisysteme weitergeleitet wird.

5. Datenverwaltungssystem zur Verwendung in einem Datenverarbeitungssystem umfassend:
mindestens einen Prozessor zum Ausführen von Instruktionen;
mindestens eine mit dem mindestens einen Prozessor verbundene Speichereinheit, wobei die Speichereinheit Instruktionen und Daten speichert;
eine Mehrzahl von in der mindestens einen Speichereinheit enthaltenen individuellen Dateisystemen;
Einrichtung, die auf die Ausführung einer Instruktion durch den mindestens einen Prozessor anspricht, zum Erzeugen einer Zugriffsanfrage für eine Datei mit einem gegebenen Dateinamen in mindestens einem der Dateisysteme mit einem spezifizierten Dateisystemnamen, wobei die Zugriffsanfrage den Dateinamen und den Dateisystemnamen spezifiziert;
Einrichtung, die auf die die Zugriffsanfrage erzeugende Einrichtung anspricht, zum Übermitteln der Zugriffsanfrage an eines der Dateisysteme;
erste Einrichtung, die auf den Empfang der Zugriffsanfrage anspricht, zum Bestimmen, ob das eine Dateisystem den spezifizierten Dateisystemnamen hat, und wenn ja, Erzeugen eines ersten Steuersignals, aber wenn nicht, Erzeugen eines zweiten Steuersignals;
zweite Einrichtung, die auf das erste Steuersignal anspricht, zum Bestimmen, ob die Zugriffsanfrage durch das Dateisystem mit dem spezifizierten Dateisystemnamen erfüllt werden kann, und wenn ja, zum Erfüllen der Zugriffsanfrage und Erzeugen eines ersten Hinweises eines erfolgreichen Zugriffs auf die Datei direkt an den mindestens einen Prozessor, und wenn nicht, zum Erzeugen eines zweiten Hinweises eines erfolglosen Zugriffs auf die Datei;
dritte Einrichtung, die auf die die Zugriffsanfrage erzeugende Einrichtung, das zweite Steuersignal und den zweiten Hinweis anspricht, zum automatischen Weiterleiten der Zugriffsanfrage an nachfolgende unterschiedliche Dateisysteme, wodurch:
(a) wenn die Zugriffsanfrage an ein Dateisystem mit dem spezifizierten Dateisystemnamen weitergeleitet wird, das erste Steuersignal durch die erste Einrichtung erzeugt wird, in welchem Fall die zweite Einrichtung entweder den ersten Hinweis oder den zweiten Hinweis erzeugt, abhängig davon, ob auf die Datei erfolgreich oder erfolglos zugegriffen wird, und
(b) wenn die Zugriffsanfrage an ein Dateisystem, das den spezifizierten Dateisystemnamen nicht hat, weitergeleitet wird, die erste Einrichtung das zweite Steuersignal erzeugt,
wobei die dritte Einrichtung aufhört, die Zugriffsanfrage weiterzuleiten, nachdem auf alle der Dateisysteme erfolglos zugegriffen wurde, und einen dritten Hinweis eines erfolglosen Zugriffs auf die Datei direkt an den mindestens einen Prozessor erzeugt.

6. Datenverwaltungssystem nach Anspruch 5, und weiter umfassend Einrichtung, die auf die die Zugriffsanfrage erzeugende Einrichtung und auf die die Zugriffsanfrage weiterleitende Einrichtung anspricht, zum Weiterleiten der Zugriffsanfrage an die Dateisysteme in einem vorbestimmten Muster.

7. Datenverwaltungssystem zur Verwendung in einem Datenverarbeitungssystem umfassend:
eine Mehrzahl von Prozessoren zum Ausführen von Instruktionen, wobei die Prozessoren durch ein Netzwerk zusammengeschaltet sind;
eine Mehrzahl von Speichereinheiten, wobei jeder Prozessor mit mindestens einer der Speichereinheiten verbunden ist, wobei die Speichereinheiten Instruktionen und Daten speichern;
eine Mehrzahl von in mindestens einer der Speichereinheiten enthaltenen individuellen Dateisystemen;
Einrichtung, die auf die Ausführung einer Instruktion durch einen der Prozessoren anspricht, zum Erzeugen einer Zugriffsanfrage für eine Datei mit einem gegebenen Dateinamen in mindestens einem der Dateisysteme mit einem spezifizierten Dateisystemnamen, wobei die Zugriffsanfrage den Dateinamen und den Dateisystemnamen spezifiziert;
Einrichtung, die auf die die Zugriffsanfrage erzeugende Einrichtung anspricht, zum Übermitteln der Zugriffsanfrage an eines der Dateisysteme;
erste Einrichtung, die auf den Empfang der Zugriffsanfrage anspricht, zum Bestimmen, ob das eine Dateisystem den spezifizierten Dateisystemnamen hat, und wenn ja, Erzeugen eines ersten Steuersignals, aber wenn nicht, Erzeugen eines zweiten Steuersignals;
zweite Einrichtung, die auf das erste Steuersignal anspricht, zum Bestimmen, ob die Zugriffsanfrage durch das Dateisystem mit dem spezifizierten Dateisystemnamen erfüllt werden kann, und wenn ja, zum Erfüllen der Zugriffsanfrage und Erzeugen eines ersten Hinweises eines erfolgreichen Zugriffs auf die Datei direkt an den einen der Prozessoren, und wenn nicht, zum Erzeugen eines zweiten Hinweises eines erfolglosen Zugriffs auf die Datei;
dritte Einrichtung, die auf die die Zugriffsanfrage erzeugende Einrichtung, das zweite Steuersignal und den zweiten Hinweis anspricht, zum automatischen Weiterleiten der Zugriffsanfrage an nachfolgende unterschiedliche Dateisysteme, wodurch:
(a) wenn die Zugriffsanfrage an ein Dateisystem mit dem spezifizierten Dateisystemnamen weitergeleitet wird, das erste Steuersignal durch die erste Einrichtung erzeugt wird, in welchem Fall die zweite Einrichtung entweder den ersten Hinweis oder den zweiten Hinweis erzeugt, abhängig davon, ob auf die Datei erfolgreich oder erfolglos zugegriffen wird, und
(b) wenn die Zugriffsanfrage an ein Dateisystem, das den spezifizierten Dateisystemnamen nicht hat, weitergeleitet wird, die erste Einrichtung das zweite Steuersignal erzeugt,
wobei die dritte Einrichtung aufhört, die Zugriffsanfrage weiterzuleiten, nachdem auf alle der Dateisysteme erfolglos zugegriffen wurde, und einen dritten Hinweis eines erfolglosen Zugriffs auf die Datei direkt an den einen der Prozessoren erzeugt.

8. Datenverwaltungssystem nach Anspruch 7, und weiter umfassend Einrichtung, die auf die die Zugriffsanfrage erzeugende Einrichtung und auf die die Zugriffsanfrage weiterleitende Einrichtung anspricht, zum Weiterleiten der Zugriffsanfrage an die Dateisysteme in einem vorbestimmten Muster.

## Revendications

1. Un procédé pour accéder à un système de fichiers dans un système de gestion de données utilisé dans un système informatique comprenant au moins un processeur, au moins une unité de mémoire connectée au processeur ou aux processeurs, et un ensemble de systèmes de fichiers individuels et un processus demandeur contenu dans l'unité ou les unités de mémoire, ce procédé comprenant les étapes suivantes :
(a) on génère une demande d'accès au moyen du processus demandeur, pour un fichier ayant un nom de fichiers donné, dans l'un des systèmes de fichiers ayant un nom de système de fichiers donné, cette demande d'accès spécifiant le nom de fichier et le nom de système de fichiers;
(b) on émet cette demande d'accès vers l'un des systèmes de fichiers;
(c) on détermine si ce système de fichiers a le nom de système de fichiers spécifié et, dans l'affirmative, on passe à l'étape (e), mais dans la négative, on dirige automatiquement la demande d'accès vers un système de fichiers différent;
(d) on répète l'étape (c) jusqu'à ce que le système de fichiers ayant le nom de système de fichiers spécifié soit localisé, auquel cas on passe ensuite à l'étape (e), ou jusqu'à ce que la demande d'accès ait été reçue par tous les systèmes de fichiers sans que le système de fichiers ayant le nom de système de fichiers spécifié n'ait été localisé, et dans ce cas on génère pour le processus demandeur une indication d'un échec de tentative d'accès au fichier; et
(e) on détermine si la demande d'accès peut être satisfaite par le système de fichiers ayant le nom de système de fichiers spécifié, et dans l'affirmative, on satisfait la demande d'accès et on génère une indication de cette condition qui est fournie directement au processus demandeur, mais dans la négative on génère pour le processus demandeur une indication d'un échec de tentative d'accès au fichier considéré.

2. Le procédé pour accéder à un système de fichiers selon la revendication 1, dans lequel aux étapes (b) et (c) la demande d'accès est toujours dirigée vers les systèmes de fichiers dans un ordre prédéterminé.

3. Un procédé pour accéder à un système de fichiers dans un système de gestion de données qui est utilisé dans un système informatique comprenant un ensemble de processeurs interconnectés par un réseau, un ensemble d'unités de mémoire, avec chaque processeur connecté à au moins une unité de mémoire, et un ensemble de systèmes de fichiers individuels et un processus demandeur contenu dans au moins une unité de mémoire, ce procédé comprenant les étapes :
(a) on génère une demande d'accès au moyen du processus demandeur, pour un fichier ayant un nom de fichier donné, dans l'un des systèmes de fichiers ayant un nom de système de fichiers donné, cette demande d'accès spécifiant le nom de fichier et le nom de système de fichiers;
(b) on émet cette demande d'accès vers l'un des systèmes de fichiers;
(c) on détermine si ce système de fichiers a le nom de système de fichiers spécifié et, dans l'affirmative, on passe à l'étape (e), mais dans la négative, on dirige automatiquement la demande d'accès vers un système de fichiers différent;
(d) on répète l'étape (c) jusqu'à ce que le système de fichiers ayant le nom de système de fichiers spécifié soit localisé, auquel cas on passe ensuite à l'étape (e), ou jusqu'à ce que la demande d'accès ait été reçue par tous les systèmes de fichiers sans que le système de fichiers ayant le nom de système de fichiers spécifié n'ait été localisé, et dans ce cas on génère pour le processus demandeur une indication d'un échec de tentative d'accès au fichier; et
(e) on détermine si la demande d'accès peut être satisfaite par le système de fichiers ayant le nom de système de fichiers spécifié, et dans l'affirmative, on satisfait la demande d'accès et on génère une indication de cette condition qui est fournie directement au processus demandeur, mais dans la négative on génère pour le processus demandeur une indication d'un échec de tentative d'accès au fichier considéré.

4. Le procédé pour accéder à un système de fichiers selon la revendication 3, dans lequel aux étapes (b) et (c), la demande d'accès est dirigée vers les systèmes de fichiers dans un ordre prédéterminé.

5. Un système de gestion de données prévu pour l'utilisation dans un système informatique, comprenant :
au moins un processeur pour exécuter des instructions;
au moins une unité de mémoire connectée au processeur ou aux processeurs, cette unité de mémoire enregistrant des instructions et des données;
un ensemble de systèmes de fichiers individuels contenus dans l'unité ou les unités de mémoire;
des moyens qui réagissent à l'exécution d'une instruction par le ou les processeurs en générant une demande d'accès pour un fichier ayant un nom de fichier donné dans l'un au moins des systèmes de fichiers ayant un nom de système de fichiers spécifié, cette demande d'accès spécifiant le nom de fichier et le nom de système de fichiers;
des moyens qui fonctionnent sous la dépendance des moyens de génération de demande d'accès en émettant la demande d'accès vers l'un des systèmes de fichiers;
des premiers moyens qui réagissent à la réception de la demande d'accès en déterminant si le système de fichiers précité a le nom de système de fichiers spécifié et qui, dans l'affirmative, génèrent un premier signal de commande, mais qui, dans la négative, génèrent un second signal de commande;
des seconds moyens qui réagissent au premier signal de commande en déterminant si la demande d'accès peut être satisfaite par le système de fichiers ayant le nom de système de fichiers spécifié, et qui, dans l'affirmative, satisfont la demande d'accès et génèrent directement pour le processeur précité une première indication signalant la réussite d'une tentative d'accès au fichier précité, et qui, dans la négative, génèrent une seconde indication signalant l'échec d'une tentative d'accès au fichier;
des troisièmes moyens qui fonctionnent sous la dépendance des moyens de génération de demande d'accès, du second signal de commande et de la seconde indication, en dirigeant automatiquement la demande d'accès vers des systèmes de fichiers différents successifs, grâce à quoi :
(a) si la demande d'accès est dirigée vers un système de fichier ayant le nom de système de fichiers spécifié, le premier signal de commande est généré par les premiers moyens, auquel cas les seconds moyens génèrent soit la première indication, soit la seconde indication, selon que la tentative d'accès au fichier réussit ou échoue, respectivement, et
(b) si la demande d'accès est dirigée vers un système de fichiers n'ayant pas le nom de système de fichiers spécifié, les premiers moyens génèrent le second signal de commande,
les troisièmes moyens cessant de diriger les demandes d'accès vers d'autres systèmes de fichiers après qu'un échec de tentative d'accès a été obtenu pour tous les systèmes de fichiers, et génèrant directement pour le processeur précité une troisième indication signalant un échec de tentative d'accès au fichier précité.

6. Le système de gestion de données selon la revendication 5, comprenant en outre des moyens qui fonctionnent sous la dépendance des moyens de génération de demande d'accès et des moyens dirigeant une demande d'accès vers d'autres systèmes de fichiers, de façon à diriger la demande d'accès vers les systèmes de fichiers selon une configuration prédéterminée.

7. Un système de gestion de données prévu pour l'utilisation dans un système informatique comprenant :
un ensemble de processeurs pour exécuter des instructions, ces processeurs étant interconnectés par un réseau;
un ensemble d'unités de mémoire, chaque processeur étant connecté à l'une au moins de ces unités de mémoire, ces unités de mémoire enregistrant des instructions et des données;
un ensemble de systèmes de fichiers individuels contenus dans l'une au moins des unités de mémoire;
des moyens réagissant à l'exécution d'une instruction par l'un des processeurs en générant une demande d'accès pour un fichier ayant un nom de fichier donné dans l'un au moins des systèmes de fichiers ayant un nom de système de fichiers spécifié, cette demande d'accès spécifiant ce nom de fichier et ce nom de système de fichiers;
des moyens qui fonctionnent sous la dépendance des moyens de génération de demande d'accès en émettant la demande d'accès vers l'un des systèmes de fichiers;
des premiers moyens qui réagissent à la réception de la demande d'accès en déterminant si le système de fichiers considéré a la nom de système de fichiers spécifié, et qui, dans l'affirmative, génèrent un premier signal de commande, mais qui, dans la négative, génèrent un second signal de commande;
des seconds moyens qui réagissent au premier signal de commande en déterminant si la demande d'accès peut être satisfaite par le système de fichiers ayant le nom de système de fichiers spécifié, et qui, dans l'affirmative, satisfont la demande d'accès et génèrent directement pour le processeur considéré une première indication signalant la réussite d'une tentative d'accès au fichier précité, et qui, dans la négative, génèrent une seconde indication signalant l'échec d'une tentative d'accès au fichier précité;
des troisièmes moyens qui fonctionnent sous la dépendance des moyens de génération de demande d'accès, du second signal de commande et de la seconde indication en dirigeant automatiquement la demande d'accès vers des systèmes de fichiers différents successifs, grâce à quoi :
(a) si la demande d'accès est dirigée vers un système de fichier ayant le nom de système de fichiers spécifié, le premier signal de commande est généré par les premiers moyens, auquel cas les seconds moyens génèrent soit la première indication soit la seconde indication, selon que la tentative d'accès au fichier réussit ou échoue, respectivement, et
(b) si la demande d'accès est dirigée vers un système de fichiers qui n'a pas le nom de système de fichiers spécifié, les premiers moyens génèrent le second signal de commande,
les troisièmes moyens cessant de diriger la demande d'accès vers différents systèmes de fichiers après l'obtention d'un échec d'une tentative d'accès pour tous les systèmes de fichiers, et générant directement pour le processeur considéré une troisième indication signalant l'échec de la tentative d'accès au fichier précité.

8. Le système de gestion de données selon la revendication 7, comprenant en outre des moyens qui fonctionnent sous la dépendance des moyens de génération de demande d'accès et des moyens dirigeant une demande d'accès vers différents systèmes de fichiers, en dirigeant la demande d'accès vers les systèmes de fichiers selon une configuration prédéterminée.
